# FASCICULE DE BREVET EUROPEEN

(11) **EP 3 565 959 B1**
(45) Date de publication et mention de la délivrance du brevet: **04.11.2020**
(21) Numéro de dépôt: 17822382.2
(22) Date de dépôt: 07.12.2017
(51) Int. Cl.: F01N 11/00, F01N 3/021, F01N 3/035, F01N 9/00

(54) **PROCÈDE DE PROTECTION D'UN FILTRE À PARTICULES DE MOTEUR À COMBUSTION INTERNE LORS D'UNE PHASE DE RÉGÉNÉRATION**
VERFAHREN ZUM SCHUTZ EINES PARTIKELFILTERS EINER BRENNKRAFTMASCHINE WÄHREND DER REGENERATION
A METHOD OF PROTECTING A PARTICULATE FILTER OF AN INTERNAL COMBUSTION ENGINE DURING REGENERATION

(30) Priorité: 05.01.2017 FR 1750086
(43) Date de publication de la demande: 13.11.2019
(73) Titulaire: PSA Automobiles SA, 78300 Poissy (FR)
(72) Inventeur: LAIGLE, Emmanuel, 92400 Courbevoie (FR); DJELLAL, Mahe, 92400 Courbevoie (FR); DUMONT, Jerome, 92160 Antony (FR)
(86) Numéro de dépôt international: PCT/FR2017/053439
(87) Numéro de publication internationale: WO 2018/127633

(56) Documents cités:
- FR-A1- 2 996 144
- GB-A- 2 454 341

## Description

La présente invention se situe dans le domaine de la dépollution des gaz d'échappement de moteur à combustion interne, en particulier dans l'élimination des particules. Plus précisément, l'invention porte sur un procédé de protection d'un filtre à particules de moteur à combustion interne lors d'une phase de régénération. L'invention trouve une application particulièrement avantageuse avec les filtres à particules équipant la ligne d'échappement de moteurs à combustion interne de type diesel.

Les gaz d'échappement des moteurs à combustion interne comportent habituellement des éléments polluants et notamment des particules qui sont rejetées dans l'atmosphère. Afin de limiter ces rejets, des filtres sont placés dans la ligne d'échappement des gaz pour bloquer les particules.

Ces filtres à particules (FAP) sont basés sur l'utilisation de cylindres en céramique composés d'une multitude de canaux de faibles diamètres (de l'ordre de la dizaine de microns). Les particules sont piégées dans ces canaux sous forme de suies, ce qui a pour effet d'encrasser progressivement le filtre. Il est donc nécessaire de régénérer le filtre périodiquement. A cette fin, le filtre est chauffé afin de brûler les particules piégées. Une technique possible consiste à chauffer le filtre à l'aide des gaz d'échappement, en élevant la température de ces gaz.

Classiquement, pendant les phases de régénération, le surplus d'énergie à l'échappement nécessaire à l'élévation de température par rapport au fonctionnement normal du moteur est fourni par l'utilisation de post-injections, c'est-à-dire d'injections de carburant tardives, après le point mort haut du cycle, ou par une dégradation du rendement de la combustion, ou encore par une injection de carburant directement dans la ligne d'échappement.

Selon les conditions de roulage, la phase de régénération du filtre à particules peut être considérée comme "sévère". En effet, lorsque la combustion des suies est en cours et que le conducteur passe au ralenti, c'est-à-dire à une vitesse du véhicule nulle et en moteur tournant, la combustion des suies s'accélère par deux phénomènes cumulatifs rencontrés lors d'un fonctionnement au ralenti.

Le premier phénomène est l'augmentation de l'oxygène envoyé dans le filtre à particules car le moteur ne brûle pratiquement plus l'oxygène de l'air qu'il admet. L'ordre de grandeur est de 20% d'oxygène brûlé au ralenti contre 2% à 15% d'oxygène brûlé hors-ralenti.

Le deuxième phénomène est la réduction du débit des gaz d'échappement par le ralentissement du moteur. En effet, hors-ralenti, le régime moteur est supérieur à 1200tr/min et le débit des gaz d'échappement varie entre 50 kg/h et 250kg/h; tandis qu'au ralenti, le régime moteur est de l'ordre de 800tr/min et le débit des gaz d'échappement est de l'ordre de 25kg/h.

En augmentant l'oxygène traversant le filtre à particules, on favorise la vitesse de combustion des particules, laquelle combustion dégage de l'énergie. Plus le débit des gaz d'échappement augmente, plus une part importante de cette énergie est évacuée. Au ralenti, une grande partie de l'énergie reste dans le filtre à particules, conduisant à une hausse de sa température interne, ce qui augmente la vitesse de combustion des suies qui libèrent donc davantage d'énergie en brûlant.

Un phénomène d'emballement peut se produire si le ralenti est suffisamment long. On brûle alors très rapidement les particules contenues dans le filtre à particules, de sorte que la température intra-filtre à particules devient très importante. Cela est potentiellement préjudiciable pour l'intégrité du filtre à particules si la température devient trop élevée ou reste élevée pendant un temps important. En effet, la température interne limite du filtre est de l'ordre de 1000 degrés pour la fonction de catalyse et de l'ordre de 1400 degrés pour la fonction de filtration. Le risque d'élévation non maîtrisé de la température est d'autant plus important lorsque la masse de suies contenue dans le filtre à particules est élevée au début de l'emballement.

Il est à noter également que l'interruption de la phase de régénération, qui conduit après un certain délai à une réduction de la température dans la ligne d'échappement, ne permet pas d'éviter ce risque car, une fois emballée, la combustion des suies s'auto-entretient par l'énergie qu'elle dégage.

On connait du document FR2996144A1 un procédé de protection d'un filtre à particules dans une ligne d'échappement comportant aussi un système de réduction catalytique sélective, mais celui-ci n'est pas assez précis en ce qui concerne la détection de l'emballement thermique du filtre à particules.

L'invention vise à remédier efficacement à ces inconvénients en proposant un procédé de protection d'un filtre à particules dans une ligne d'échappement d'un moteur à combustion interne, notamment d'un véhicule automobile, comportant un système de réduction catalytique sélective et un filtre à particules, caractérisé en ce que le procédé comporte :
- une étape d'estimation d'un débit massique de suies brûlées dans le filtre à particules au cours d'une régénération du filtre à particules,
- une étape de comparaison du débit massique de suies brûlées estimé avec un seuil de débit massique prédéterminé, et
- dans le cas où le débit massique de suies brûlées estimé devient supérieur au seuil de débit massique prédéterminé, le procédé comporte une étape d'injection de liquide de dépollution dans la ligne d'échappement en amont du filtre à particules.

L'invention permet ainsi de limiter la température maximale dans le filtre à particules lors d'un emballement de la combustion des suies se produisant lors d'une phase de ralenti moteur. Cela permet en outre une réduction des dégradations du filtre à particules et de son imprégnation éventuelle.

Selon une mise en œuvre, le seuil de débit massique prédéterminé est calibrable.

Selon une mise en œuvre, le liquide de dépollution est injecté suivant un débit constant.

Selon une mise en œuvre, un débit du liquide de dépollution injecté dans la ligne d'échappement est adapté en fonction d'un débit de combustion de suies.

Selon une mise en œuvre, l'injection de liquide de dépollution dans la ligne d'échappement est réalisée si une masse de suies dans le filtre à particules dépasse une valeur seuil.

Selon une mise en œuvre, le filtre à particules est positionné entre un injecteur et un catalyseur du système de réduction catalytique sélective.

Selon une mise en œuvre, le liquide de dépollution contient de l'eau et de l'urée.

L'invention a également pour objet un calculateur comportant une mémoire stockant des instructions logicielles pour la mise en œuvre du procédé de protection d'un filtre à particules d'une ligne d'échappement, tel que précédemment défini.

L'invention a également pour objet un ensemble de motorisation comprenant un moteur à combustion interne équipé d'une ligne d'échappement comportant un filtre à particules, et doté d'un tel calculateur.

L'invention a également pour objet un véhicule comprenant un tel ensemble de motorisation.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique d'une ligne d'échappement comportant un système de dépollution des gaz d'échappement piloté suivant le procédé selon la présente invention;
La figure 2 est une représentation graphique de quatre simulations de régénérations sévères d'un filtre à particules pour quatre masses de suies différentes montrant l'évolution, en fonction du temps, du débit des gaz à l'échappement, du niveau d'oxygène dans le filtre à particules et de la température en amont du filtre à particules;
La figure 3 est une représentation graphique de l'évolution de la masse de suies dans le filtre à particules pour différents niveaux d'injection de liquide de dépollution dans la ligne d'échappement et différentes masses de suies initiales;
La figure 4 est une représentation graphique des débits correspondant aux différents niveaux d'injection de liquide de dépollution dans la ligne d'échappement;
La figure 5 est une représentation graphique de l'évolution de la température maximale dans le filtre à particules pour différents niveaux d'injection de liquide de dépollution injectés dans la ligne d'échappement et différentes masses de suies initiales;
La figure 6 est un diagramme fonctionnel des différentes étapes du procédé de protection thermique du filtre à particules selon la présente invention.

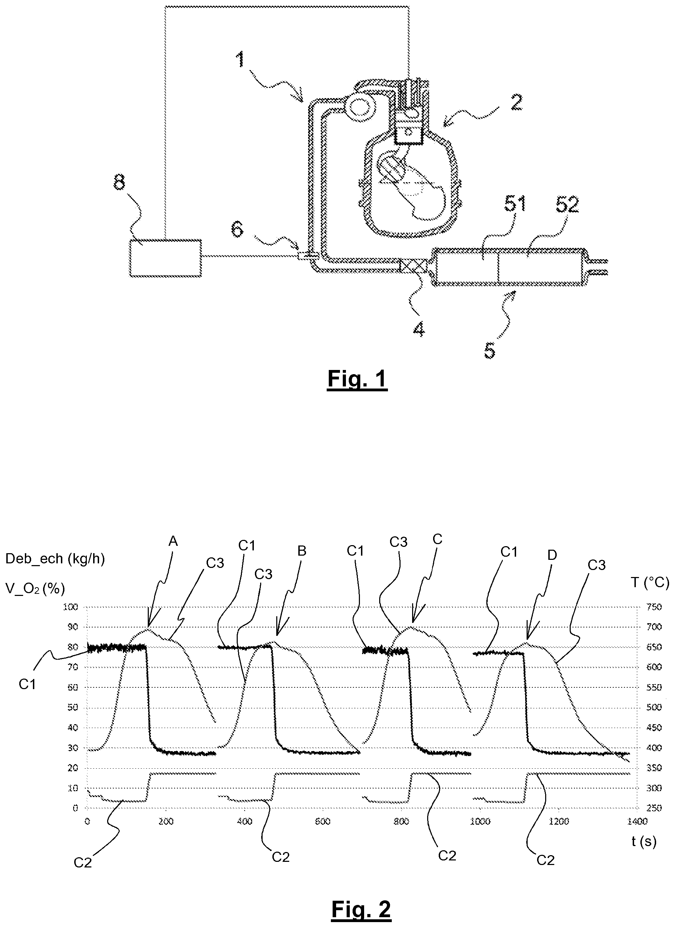

La figure 1 représente une ligne d'échappement 1 d'un moteur à combustion interne 2 sur laquelle est implanté un système de dépollution 5 intégrant par exemple un filtre à particules 51 et un catalyseur 52 de système de réduction catalytique sélective (SCR). Un injecteur 6 de liquide de dépollution est positionné en amont du système de dépollution 5.

Une boîte de mélange 4 permet d'augmenter la distance parcourue par les gaz d'échappement entre le point d'injection et le catalyseur 51 via l'établissement d'une trajectoire en forme de spirale. Cela facilite le mélange avec les gaz d'échappement ainsi que l'évaporation des gouttelettes du liquide de dépollution.

Le système SCR est adapté à injecter le liquide de dépollution dans la ligne d'échappement 1 afin de transformer les oxydes d'azote (NOx) rejetés par le moteur 2 en azote et en eau. En l'occurrence, le liquide de dépollution est constitué d'urée solubilisée dans de l'eau. Le liquide de dépollution est ainsi par exemple un mélange de 32,5% d'urée et de 67,5% d'eau.

Un calculateur 8 assure notamment la commande du moteur à combustion interne 2, ainsi qu'une gestion des différents éléments de post-traitement des gaz d'échappement. En particulier, le calculateur 8 gère l'injection de la quantité de liquide de dépollution dans la ligne d'échappement 1 en fonction des conditions de fonctionnement du moteur 2 ainsi que les différents modes de combustion du moteur 2.

Le calculateur 8 comporte une mémoire stockant des instructions logicielles pour la mise en œuvre du procédé selon l'invention de protection du filtre à particules 51 permettant de limiter la température maximale dans le filtre à particules 51 en cas d'emballement de la combustion des suies lors d'une phase de régénération du filtre à particules 51.

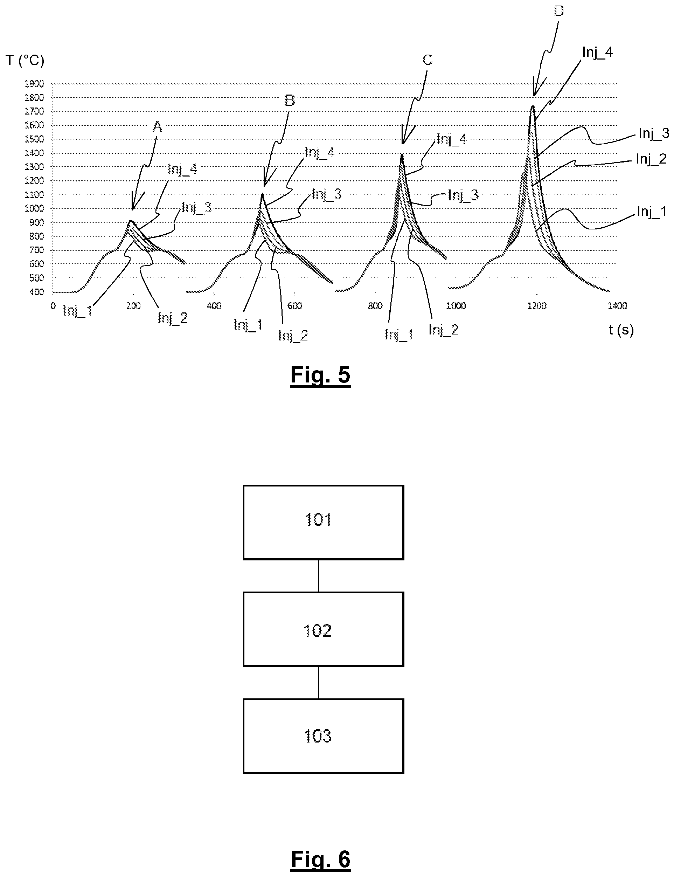

On décrit ci-après, en référence avec la figure 6, les différentes étapes de ce procédé. Pendant la régénération du filtre à particules 51, le calculateur moteur 8 estime en continue, dans une étape 101, un débit massique de suies brûlées. Ce débit massique est estimé notamment en fonction des conditions de fonctionnement du moteur, du niveau d'oxygène et de la température dans le filtre à particules 51.

Dans une étape 102, le débit massique de suies brûlées estimé est comparé avec un seuil de débit massique prédéterminé. Ce seuil pourra être calibrable. Ce seuil pourra par exemple être compris entre 0,15 g/s et 0,40 g/s, et valoir de préférence 0,20 g/s. En cas de régénération sévère, le débit massique de suies brûlées devient sensiblement plus important par rapport à une régénération standard et dépasse alors le seuil.

Le calculateur 8 commande alors, dans une étape 103, une injection de liquide de dépollution dans la ligne d'échappement 1 pour protéger le filtre à particules 51 en réduisant sa température interne. L'injection de liquide de dépollution est réalisée en amont du filtre à particules 51.

La réaction d'évaporation du liquide de dépollution étant très endothermique, c'est-à-dire qu'elle consomme de l'énergie, l'injection de liquide de dépollution dans la ligne d'échappement 1 permet de consommer l'excès d'énergie disponible dans le filtre à particules 51 et donc de limiter la température maximale atteinte. L'intégrité du filtre à particules 51 est ainsi préservée.

Lorsque le débit massique de suies brûlées estimé devient inférieur au seuil de débit massique prédéterminé, l'injection de liquide de dépollution dans la ligne d'échappement 1 pourra être arrêtée.

Dans les simulations décrites ci-après, on assimile le liquide de dépollution à de l'eau et on applique l'endotherme correspondant à l'évaporation de la quantité de liquide injectée au filtre à particules 51.

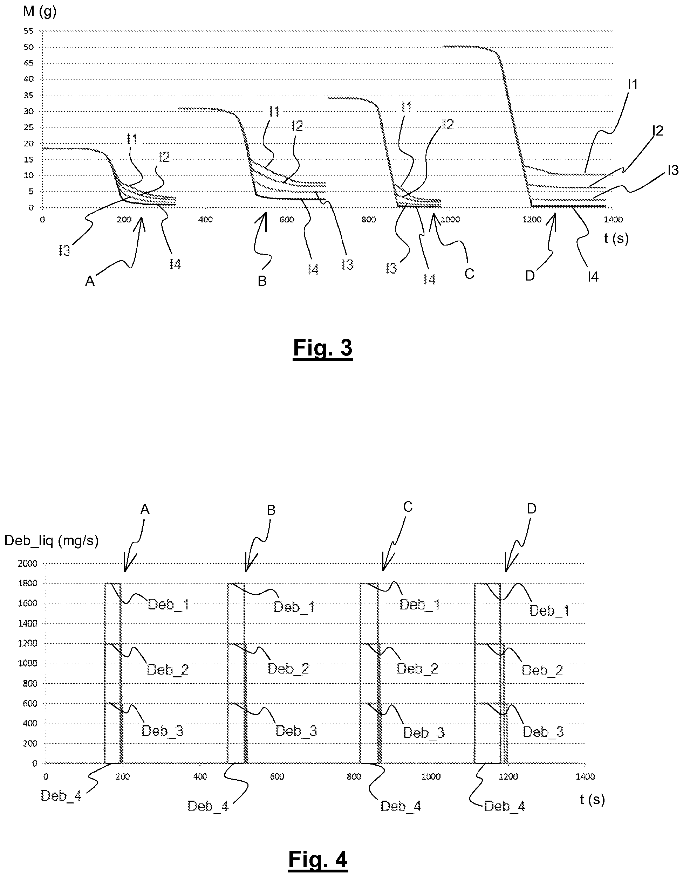

La figure 2 est une représentation graphique de quatre simulations A, B, C, D de régénérations sévères du filtre à particules 51, pour quatre masses de suies différentes, à savoir respectivement environ 18g, 31g, 34g et 50g, tel que cela ressort de la figure 3. Au début de la régénération, le débit des gaz d'échappement Deb_ech (cf. courbe C1) et le volume d'oxygène V_O₂ (cf. courbe C2) sont constants. La température T en amont du filtre à particules 51 (cf. courbe C3) augmente progressivement pour atteindre une température suffisante pour permettre la combustion des suies.

Lorsque la température T atteint une température cible, par exemple de l'ordre de 650-700 °C,le moteur passe au ralenti. Le débit des gaz d'échappement Deb_ech chute et le volume d'oxygène V_O₂ augmente brutalement. On passe alors en régénération sévère. Le volume d'oxygène V_O₂ disponible accélère la combustion des suies, ce qui génère beaucoup d'énergie qui n'est pas évacuée en raison du faible débit des gaz d'échappement Deb_ech.

Cela a pour effet d'augmenter la température interne du filtre à particules 51, qui augmente davantage la vitesse de combustion des suies, etc. La température interne du filtre à particules 51 atteint alors des valeurs susceptibles de le dégrader. Ces valeurs sont de l'ordre de 1400°C pour un filtre à particules dassique, et de l'ordre de 1000°C pour un filtre à particules ayant une imprégnation catalytique.

La figure 3 montre l'évolution de la masse de suies dans le filtre à particules 51 pour différents niveaux d'injection de liquide de dépollution lorsque le débit massique de combustion des suies devient supérieur au seuil de débit massique prédéterminé. Les courbes I1, I2, I3 et I4 correspondent ainsi respectivement à une forte injection, une moyenne injection, une faible injection, et une absence d'injection de liquide de dépollution.

Comme cela ressort de la figure 4, le débit d'injection Deb_liq de liquide de dépollution référencé Deb_1 correspondant à la forte injection est de l'ordre de 1800 mg/s. Le débit d'injection Deb_2 correspondant à l'injection moyenne est de l'ordre de 1200 mg/s. Le débit d'injection Deb_3 correspondant à l'injection faible est de l'ordre de 600 mg/s. Le débit d'injection Deb_4 correspondant à l'absence d'injection est nul.

Comme cela ressort de la figure 5, on remarque que les injections notamment forte (cf. Inj_1) et moyenne (cf. Inj_2) de liquide de dépollution permettent de contrôler le phénomène d'emballement de la combustion des suies en réduisant rapidement la température interne du filtre à particules 51 en dessous des températures critiques précitées de 1000°C ou 1400°C. On précise que les références Inj_3 et Inj_4 correspondent respectivement à une injection faible et à une absence d'injection de liquide de dépollution.

De préférence, l'injection de liquide de dépollution est effectuée si la masse de suies M dans la ligne d'échappement 1 est à risque, car une régénération sévère sur une masse de suies M peu importante n'engendre pas des températures susceptibles de dégrader le filtre à particules 51, comme cela ressort de la simulation A (cf. figure 5).

Ainsi, l'injection du liquide de dépollution dans la ligne d'échappement 1 pourra être autorisée uniquement si la masse de suies M stockée dans le filtre à particules 51 dépasse une valeur seuil, par exemple comprise entre 20 g et 30 g. Cette valeur seuil pourra bien entendu être adaptée en fonction de la température seuil considérée à ne pas dépasser dans le filtre à particules 51.

Le liquide de dépollution pourra être injecté suivant un débit constant, comme cela a été le cas dans les simulations A, B, C, et D. En variante, le débit d'injection du liquide de dépollution pourra être adapté en fonction du débit de combustion de suies brûlées estimé en continue. Ce débit d'injection pourra par exemple varier entre 600g/s et 1800g/s lors de la régénération du filtre à particules 51.

Il est à noter que l'efficacité du procédé selon l'invention est réduite si l'injection de liquide de dépollution n'est pas réalisée en amont du filtre à particules 51 lui-même. En effet, si un dispositif de dépollution, tel que le catalyseur 52, est présent entre l'injecteur 6 et le filtre à particules 51, le liquide de dépollution injecté servira d'abord à refroidir ce dispositif avant de réduire la température du filtre à particules 51. En conséquence, le filtre à particules 51 est positionné entre l'injecteur 6 et le catalyseur 52 du système de réduction catalytique sélective.

En pratique, le procédé selon l'invention peut conduire à un relargage d'ammoniac gazeux dans l'atmosphère. En effet, le liquide de dépollution injecté se décompose en ammoniac qui ne peut pas être stocké dans la ligne d'échappement 1 lors d'une régénération du filtre à particules 51, en raison des températures très élevées et de la grande quantité de liquide de dépollution à injecter. Toutefois, dans ce domaine de température, une grande partie de l'ammoniac gazeux est oxydé en oxydes d'azote, ce qui contribue à réduire l'amplitude de l'ammoniac relargué potentiel.

## Revendications

1. Procédé de protection d'un filtre à particules (51) dans une ligne d'échappement (1) d'un moteur à combustion interne (2), notamment d'un véhicule automobile, comportant un système de réduction catalytique sélective et un filtre à particules (51), **caractérisé en ce que** ledit procédé comporte :
- une étape (101) d'estimation d'un débit massique de suies brûlées dans ledit filtre à particules (51) au cours d'une régénération dudit filtre à particules (51),
- une étape (102) de comparaison dudit débit massique de suies brûlées estimé avec un seuil de débit massique prédéterminé, et
- dans le cas où ledit débit massique de suies brûlées estimé devient supérieur audit seuil de débit massique prédéterminé, ledit procédé comporte une étape (103) d'injection de liquide de dépollution dans ladite ligne d'échappement (1) en amont dudit filtre à particules (51).

2. Procédé selon la revendication 1, **caractérisé en ce que** ledit seuil de débit massique prédéterminé est calibrable.

3. Procédé selon la revendication 1 ou 2, **caractérisé en ce que** ledit liquide de dépollution est injecté suivant un débit constant.

4. Procédé selon la revendication 1 ou 2, **caractérisé en ce qu'**un débit du liquide de dépollution injecté dans ladite ligne d'échappement (1) est adapté en fonction d'un débit de combustion de suies.

5. Procédé selon l'une quelconque des revendications 1 à 4, **caractérisé en ce que** ladite injection de liquide de dépollution dans ladite ligne d'échappement (1) est réalisée si une masse de suies (M) dans ledit filtre à particules (51) dépasse une valeur seuil.

6. Procédé selon l'une quelconque des revendications 1 à 5, **caractérisé en ce que** ledit filtre à particules (51) est positionné entre un injecteur (6) et un catalyseur (52) dudit système de réduction catalytique sélective.

7. Procédé selon l'une quelconque des revendications 1 à 6, **caractérisé en ce que** ledit liquide de dépollution contient de l'eau et de l'urée.

8. Calculateur (8) comportant une mémoire stockant des instructions logicielles pour la mise en œuvre dudit procédé de protection d'un filtre à particules (51) d'une ligne d'échappement (1), tel que défini selon l'une quelconque des revendications précédentes.

9. Ensemble de motorisation comprenant un moteur à combustion interne équipé d'une ligne d'échappement comportant un filtre à particules, **caractérisé en ce qu'**il est doté d'un calculateur selon la revendication précédente.

10. Véhicule **caractérisé en ce qu'**il comprend un ensemble de motorisation selon la revendication précédente.

## Patentansprüche

1. Verfahren zum Schutz eines Partikelfilters (51) in einer Abgasleitung (1) eines Verbrennungsmotors (2), insbesondere eines Kraftfahrzeugs, umfassend ein selektives katalytisches Reduktionssystem und einen Abgasfilter. Teilchen (51), die **dadurch gekennzeichnet sind, dass** das Verfahren umfasst:
- einen Schritt (101) zum Schätzen eines Massenflusses von Ruß, der in dem Teilchenfilter (51) während der Regeneration des Teilchenfilters (51) verbrannt wurde,
- einen Schritt (102) zum Vergleichen des geschätzten Massenflusses von verbranntem Ruß mit einer vorbestimmten Massenflussschwelle, und
- in dem Fall, in dem der geschätzte Massenstrom von verbranntem Ruß größer als die vorbestimmte Massenflussschwelle wird, umfasst das Verfahren einen Schritt (103) zum Injizieren von Entleerungsflüssigkeit in die Abgasleitung (1) stromaufwärts des Partikelfilters (51).

2. Verfahren nach Anspruch 1, **dadurch gekennzeichnet, dass** die vorbestimmte Massendurchflussschwelle kalibrierbar ist.

3. Verfahren nach Anspruch 1 oder 2, **dadurch gekennzeichnet, dass** die Entleerungsflüssigkeit mit einer konstanten Geschwindigkeit injiziert wird.

4. Verfahren nach Anspruch 1 oder 2, **dadurch gekennzeichnet, dass** eine Durchflussrate der in die Abgasleitung (1) eingespritzten Entleerungsflüssigkeit als Funktion einer Rußverbrennungsdurchflussrate angepasst wird.

5. Verfahren nach einem der Ansprüche 1 bis 4, das **dadurch gekennzeichnet ist, dass** die Einspritzung von Depollutionsflüssigkeit in die Abgasleitung (1) durchgeführt wird, wenn eine Rußmasse (M) in dem Partikelfilter (51) überschreitet ein Schwellenwert.

6. Verfahren nach einem der Ansprüche 1 bis 5, **gekennzeichnet dadurch, dass** der Partikelfilter (51) zwischen einem Injektor (6) und einem Katalysator (52) des selektiven katalytischen Reduktionssystems positioniert ist.

7. Verfahren nach einem der Ansprüche 1 bis 6, **dadurch gekennzeichnet, dass** die Entleerungsflüssigkeit Wasser und Harnstoff enthält.

8. Computer (8) mit einem Speicher, der Softwareanweisungen zum Implementieren des Verfahrens zum Schutz eines Partikelfilters (51) einer Abgasleitung (1) umfasst, wie gemäß einem der Ansprüche definiert die vorherigen.

9. Motorisierungsanordnung, umfassend einen Verbrennungsmotor, der mit einer Abgasleitung mit einem Partikelfilter ausgestattet ist, **dadurch gekennzeichnet, dass** sie mit einem Computer gemäß dem vorhergehenden Anspruch ausgestattet ist.

10. Fahrzeug, das **dadurch gekennzeichnet ist, dass** es eine Motoranordnung gemäß dem vorhergehenden Anspruch umfasst.

## Claims

1. Method of protecting a particulate filter (51) in an exhaust line (1) of an internal combustion engine (2), in particular of a motor vehicle, comprising a selective catalytic reduction system and an exhaust filter particles (51), **characterized in that** said method comprises:
- a step (101) of estimating a mass flow rate of soot burnt in said particle filter (51) during regeneration of said particle filter (51),
- a step (102) of comparing said estimated mass flow of soot burnt with a predetermined mass flow threshold, and
- in the case where said estimated mass flow of soot burnt becomes greater than said predetermined mass flow threshold, said method comprises a step (103) for injecting pollution control liquid into said exhaust line (1) upstream of said particulate filter (51).

2. Method according to Claim 1, **characterized in that** the said predetermined mass flow rate threshold is calibratable.

3. Method according to Claim 1 or 2, **characterized in that** the said depollution liquid is injected at a constant rate.

4. Method according to Claim 1 or 2, **characterized in that** a flow rate of the depollution liquid injected into said exhaust line (1) is adapted as a function of a soot combustion flow rate.

5. Method according to any one of claims 1 to 4, **characterized in that** said injection of depollution liquid into said exhaust line (1) is carried out if a mass of soot (M) in said particle filter (51) exceeds a threshold value.

6. Method according to any one of claims 1 to 5, **characterized in that** said particulate filter (51) is positioned between an injector (6) and a catalyst (52) of said selective catalytic reduction system.

7. Method according to any one of Claims 1 to 6, **characterized in that** the said depollution liquid contains water and urea.

8. Computer (8) comprising a memory storing software instructions for the implementation of said method of protecting a particle filter (51) of an exhaust line (1), as defined according to any one of claims previous ones.

9. Motorization assembly comprising an internal combustion engine equipped with an exhaust line comprising a particulate filter, **characterized in that** it is equipped with a computer according to the preceding claim.

10. Vehicle **characterized in that** it comprises an engine assembly according to the preceding claim.
